# EUROPEAN PATENT SPECIFICATION

(11) **EP 3 597 968 B1**
(45) Date of publication and mention of the grant of the patent: **22.06.2022**
(21) Application number: 19187058.3
(22) Date of filing: 18.07.2019
(51) Int. Cl.: F16H 63/18, F16H 61/32

(54) **A GEARBOX ASSEMBLY**
GETRIEBEANORDNUNG
ENSEMBLE DE BOÎTE DE VITESSES

(30) Priority: 18.07.2018 GB 201811724
(43) Date of publication of application: 22.01.2020
(73) Proprietor: Williams Grand Prix Engineering Limited, Wantage, Oxfordshire OX12 0DQ (GB)
(72) Inventor: Nevill, Doug, Wantage, Oxfordshire OX12 0DQ (GB); Oxley, Alistair, Wantage, Oxfordshire OX12 0DQ (GB)
(74) Representative: Barker Brettell LLP

(56) References cited:
- FR-A1- 2 983 549
- FR-A1- 3 031 376
- US-A- 4 716 778
- US-A1- 2010 043 586

## Description

This invention relates to improvement in gearbox assemblies, in particular but not exclusively to sequential gearbox assemblies.

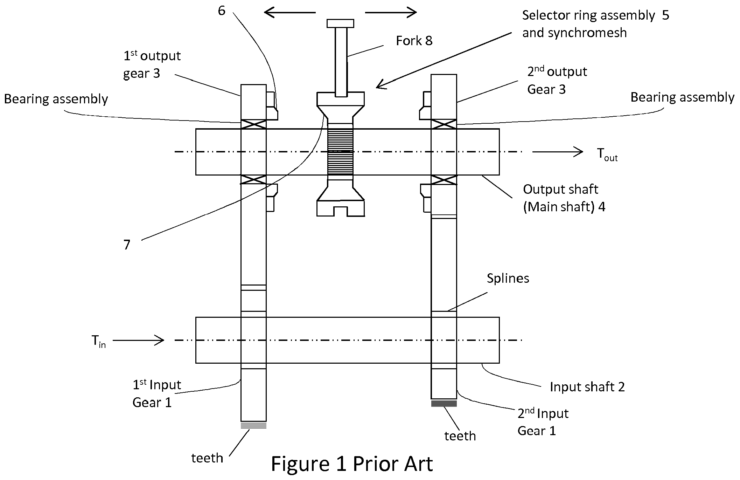

It is known to provide a gearbox for a vehicle, in particular a car, which transfers power from an input shaft to an output shaft, known as a main shaft, through one or more selectable gear ratios. An example of the layout of a typical prior art gearbox is shown in Figure 1 of the drawings. Each gear ratio comprises an input gearwheel 1 that rotates with the input shaft 2 that is meshed with an output gearwheel 3 that rotates with the main shaft 4. The gearbox will typically contain four or more gear ratios, with gearboxes having 6 or more being common in a modern vehicle. In the example two gear ratios are shown, each provided by a pair of input and output gear wheels.

The selection of the gear ratio may be manual, initiated by the user operating a gear lever or a gear selector paddle. In some cases the selection may be fully automated requiring no driver input, and in others there may be a mix of manual and automated gear selection.

In a known type of gearbox assembly, the gearwheels that are located on the main shaft are free to spin around the main shaft 4 until they are selected. A gearbox assembly of this type is known as a constant mesh gearbox assembly. To select the gear ratio, a selector ring assembly 5 which is constrained so that it cannot rotate relative to the main shaft 4 is driven axially along the main shaft 4 into engagement with the output gearwheel. On a road car, where refinement is a priority and driver skill may be relatively low, a synchromesh mechanism may be provided to assist in engagement of the selector ring with the gearwheel. In the example this comprises a pair of conical surfaces 6,7. Once engaged, drive is transferred through the selector ring onto the main shaft. When the gear ratio is deselected the selector ring is pulled away from the gear wheel.

To move the selector ring assembly 5 to and fro along the main shaft it is known to provide selector forks 8 that extend away from respective selector rings alongside the gearwheel. These forks are each connected to an actuator mechanism (not shown) that moves the forks in a pattern to drive the selector ring to and fro as required. The skilled person will be familiar with a wide range of different actuator mechanisms for moving the selector forks.

In a manual gearbox, the end of the fork 8 furthest from the selector ring may be secured to an actuator mechanism in the form of a rod which can be moved by a driver operating a manual gear lever. The movement of this rod may be robotized to provide what is known as a semi-manual or robotised gearbox. There are typically multiple rods with each fork connected to one rod. Another type of gearbox assembly is known from FR 3 031376 A1, where a selector barrel is located inside a gearbox shaft.

The applicant has appreciated that the need to locate selector forks between adjacent gear ratios of the gearbox limits the overall minimum axial length of the gearbox that can be achieved for a given set of gear wheels. The forks must be relatively sturdy if they are to move at high speeds accurately, and there must also be a clearance that enables the forks to move. The applicant has appreciated that in some applications it is desired to reduce the length of the gearbox, and an object of the invention is therefore to provide a gearbox which may be more compact than a prior art gearbox that uses selector forks.

According to a first aspect the invention provides a gearbox assembly comprising:
a first shaft and a second shaft,
a gearset comprising:
   a first gear wheel fixed to the first shaft and
   a second gear wheel that is supported by an annular bearing assembly around the second shaft, the second gear wheel having an engagement face,
   in which the first gear wheel and second gear wheel are permanently intermeshed to define one gear ratio of the gearbox so that rotation of the first shaft causes corresponding rotation of the first gear wheel and in turn rotation of the second gear wheel, and
   a selector mechanism comprising:
      a selector barrel located inside the second shaft having at least one selector barrel track that guides a selector peg, rotation of the selector barrel causing an axial movement of the selector pin relative to the second shaft,
      a selector ring assembly having an engagement face, the selector ring assembly being movable axially along the second shaft between an engaged position and a disengaged position, the engagement face of the selector ring in the engaged position engaging with the engagement face of the second gear wheel and in the disengaged position the two engagement faces being spaced apart,
      and further comprising a selector shoe assembly that connects the selector ring assembly to the selector peg so that the axial position of the selector ring is set by the axial position along the second shaft of the selector peg.

The first shaft may comprise an input shaft of the gearbox and the second shaft may comprise an output shaft of the gearbox commonly referred to as a main shaft. In this case, the first gear wheel may comprise an input gear and the second gear wheel may comprise an output gear. When engaged, torque transfers from the first shaft through the gearwheels and the selector ring onto the second shaft, or transfers along the same path in the opposing direction through the gearbox. When disengaged, the output gearwheel spins freely around the second shaft so that no torque is transferred between the two shafts. Alternatively, the first shaft may be the output shaft of the gearbox assembly.

In the present invention the placing of a selector barrel inside the second shaft and using a selector shoe assembly to connect a selector peg that runs in the track of a selector barrel to a rotating selector ring a more compact mechanism can be provided compared with the prior art. There is no longer a need for a space between adjacent gears for a selector fork to pass through.

The selector shoe assembly may comprise a rotationally fixed portion that does not rotate with the second shaft and is connected to the selector peg, a rotationally free portion that rotates with the second shaft and is connected to the selector ring, and a bearing assembly which connects the rotationally fixed portion to the rotationally free portion whilst preventing relative axial movement between the rotationally fixed and rotationally free portions.

In use, the rotationally free portion will spin round with the second shaft, and the rotationally fixed portion will not spin around, yet both will move together axially as one item when the selector pegs move to engage or disengage a gear ratio.

The rotationally fixed portion may comprise a selector shoe that defines a support track for the bearing assembly. The selector shoe may comprise an annular ring that is concentric with the selector barrel and is connected to the selector peg. The selector peg may be keyed or otherwise directly fixed to the selector shoe.

The bearing assembly of the selector shoe assembly may comprise an annular inner race that is received by the track of the selector shoe, an annular outer race that is connected to the selector ring, and a plurality of bearings located between the two races. In an alternative the inner race may be integrally formed with the selector shoe, and the track of the selector shoe may define the inner race of the bearing assembly. The rotationally free portion of the selector shoe assembly may be connected to the selector ring by at least one selector pin. This be fixed at one end to the rotationally free portion and at the other to the selector ring, for instance by a threaded engagement.

The selector bearing assembly may be connected to the selector ring by at least one connector, such as a selector pin. A slot may be provided in the second shaft along which the pin may move as the gears are engaged or disengaged.

There may be more than one selector pin, each passing through a respective slot in the second shaft. Preferably there are at least three which may be spaced equi-distant apart around the circumference of the outer race. i.e. at 120 degrees apart for three pins. Each selector pin may connect the outer race of the bearing assembly to the selector ring.

According to the invention, the selector barrel is located within a support tube that is located within the second shaft, concentric with the second shaft. The support tube is secured so that is does not rotate relative to the gearbox housing. The support tube may be located inside the selector shoe assembly. In use, the selector barrel will be fixed rotationally and axially relative to this support tube, only rotating relative to the support tube when it is required to disengage or engage a gear.

An axial slot is provided in the support tube which the selector peg passes through and can move along as the selector barrel rotates. The selector shoe assembly may be located outside of the support tube and may be splined to the support tube to restrain the shoe from rotating whilst permitting it to move axially along the splines.

The second gear wheel may be supported by a gear hub. Where the gear hub extends over the slot or slots in the second shaft, the gear hub may also include a slot which is aligned with the slot in the main shaft so that the selector pin can pass through.

The second gear wheel may be supported by one or more bearing assemblies so that when clear of the selector rings the gearwheel may rotate around the gear hub.

The second gearwheel may be supported by a bearing assembly that may comprise a double row of bearings or a single row.

The gear hub may be connected to the second shaft through cooperating splines, and must be prevented from moving both rotationally and axially relative to the second shaft. It may be secured axially to the second shaft by one or more bolts. It may in other arrangements by an integral part of the main shaft, with the gear hub and main shaft forming a unitary body.

The selector ring assembly may carry a set of dog teeth and the second gear wheel may carry a further set of dog teeth, the two sets of dog teeth meshing when the selector ring assembly is in the engaged position.

To correctly match the speed of the second gearwheel to that of the second shaft as the gear is engaged the selector ring and gearwheel may each include a respective part of a synchromesh mechanism which is arranged in use to cause the speed of the gearwheel and the speed of the selector ring to match due to frictional engagement of the two parts of the synchromesh mechanism prior to the engagement faces being brought into contact.

The synchromesh mechanism may comprise an internal cone formed on the end face of the gearwheel inside the first engagement face, and an external cone formed on a part of the selector ring inside of the second engagement face, the two cones being brought into frictional engagement as the selector ring moves from the disengaged to the engaged position prior to the engagement faces mating. Of course, the skilled person familiar with gearbox design will appreciate that many other forms of synchromesh are possible and that they can be applied to the present invention.

The selector ring may comprise an inner ring that is connected to the selector pin, an intermediate ring that carries the outer cone, an outer ring that carries the second engagement face, and a rigid link that passes through a radial slot in the intermediate ring to connect the inner ring and outer rings together, the intermediate ring being free to move axially relative to the inner and outer ring. The rigid link may comprise one or more radially extending fasteners such as connecting pins.

In an alternative arrangement better suited to racing cars or to motorcycles, the selector ring may comprise a dog ring, carrying a set of dog teeth on one end face with faces the gearwheel, the dog teeth defining the engagement face of the selector ring. There is no synchromesh in this alternative as the priority is to provide quick and positive engagement of gears. Removing the synchromesh also keeps weight lower and increases reliability as there are fewer parts. In this arrangement, the gear wheel may also carry a set of dog teeth on one end face with faces the selector ring, the dog teeth defining the engagement face of the gearwheel. The design of appropriate dog teeth for such an application is well known to the person skilled in the art. Torque is transferred from the gear wheel to the selector ring and hence to the main shaft when the sets of dog teeth engage.

The selector ring may be located in the disengaged position at least partially within an undercut of the second gear wheel. This reduces the axial length of the gearbox, for a given width of gear, compared with an arrangement in which the selector ring is spaced apart axially from the gear when in the disengaged position.

The selector barrel may comprise an elongate barrel that defines at least one track on an outer face in which the selector pin is located that extends around at least a part of the circumference of the barrel, the track being shaped such that rotation of the selector barrel mechanism is converted into a pattern of linear motion of the selector pin axially relative to the second shaft. Such barrel mechanisms are known in the art for controlling the movement of selector forks and their design requirements are well understood. The applicant appreciates for the first time that they may be used inside the second shaft rather than used to control the movement of selector forks.

The gearbox assembly may include an actuator which controls the rotational position of the selector barrel relative to the gearbox housing, and relative to the fixed support tube where provided. The actuator may be located at an end of the selector barrel. Because the selector barrel only rotates when changing gear, and therefore only needs to rotate through a limited range, it is relatively simple to fix the actuator relative to the gearbox housing and to connect the actuator to an appropriate electrical supply,.

The gearbox may include more than one gear ratio selectable by the one selector ring assembly and so may further include:
a third gear wheel fixed to the first shaft and
a fourth gear wheel that is supported by an annular bearing assembly around the second shaft, the fourth gear wheel having an engagement face, the third and fourth gearwheels being axially offset from the first and second gearwheels,
in which the third gear wheel and fourth gear wheel are permanently intermeshed to define one gear ratio of the gearbox so that rotation of the first shaft causes corresponding rotation of the first gear wheel and in turn rotation of the second gear wheel,
the selector ring being located axially between the second gearwheel and the third gearwheel and being movable by the selector pin between a disengaged position and two engaged positions, a first of the engaged positions mating the selector ring to the second gearwheel and a second engaged position in which the selector ring mates with the fourth gear wheel. This allows the one selector ring to be used to select two gear ratios.

The selector ring may therefore be provided with an engagement face on both radial end faces. Each engagement face may comprise a set of dog teeth

The gearbox assembly may include a fifth gear wheel fixed to the first shaft and
a sixth gear wheel that is supported by an annular bearing assembly around the second shaft, the sixth gear wheel having an engagement face, the fifth and sixth gearwheels being axially offset from the first and second gearwheels,
in which the fifth gear wheel and sixth gear wheel are permanently intermeshed to define one gear ratio of the gearbox so that rotation of the first shaft causes corresponding rotation of the fifth gear wheel and in turn rotation of the sixth gear wheel,
a second track carried by the selector barrel or a second selector barrel that guides a second selector peg, rotation of the associated selector barrel causing movement of the second selector pin in a direction that is parallel to the axis of the second shaft,
a second selector ring assembly movable axially along the second shaft between an engaged position and a disengaged position, the selector ring in the engaged position engaging with the sixth gear wheel and in the disengaged position being spaced apart from the sixth gear wheel,
and further comprising a second selector shoe assembly that connects the second selector ring assembly to the second selector peg so that the axial position of the second selector ring is set by the axial position along the second shaft of the second selector peg.

The first, second, third and fourth gear wheels of the gearset, the selector ring and selector shoe assembly may be duplicated to provide two further gear ratios including the fifth and sixth plus a further seventh and eighth gear wheel. The second selector peg may be provided that connects the second, duplicate, selector shoe assembly to another track on the selector barrel, or to a different portion of a common track.

The duplicated components may be substantially identical to the originally mentioned components apart from being axially offset and having different numbers of teeth on the gearwheel to give different gear ratios. Of course, by substantially identical we mean that they function in the same way but are geometrically different, so as to provide different- non-duplicated- gear ratios.

The second, duplicate, selector ring may be connected to a annular bearing by at least one selector pin, which is in turn carried by a selector shoe which is in turn connected to a selector peg. The arrangement may therefore be the same as for the arrangement described herein before, only located in a different axially position along the main shaft.

There may be more than two pairs of gear wheels, for instance three pairs to provide a six speed gearbox, or four pairs to define an eight speed gearbox. Each pair may define a different gear ratio to the others by having a unique ratio of teeth on the input gear to teeth on the output gear.

The selector barrel may include tracks and a selector peg for every selector shoe assembly of the gearbox so that all the gear ratios are selected from one selector barrel. This provides a sequential gearbox as the gears can only be selected or deselected in a defined sequence moving up or down the gearbox, e.g. 1-2-3-4 etc or - 4-3-2-1.

In another arrangement, a second selector barrel may be provided which can be rotated independently of the first selector barrel. This may share an axis of rotation with the first selector barrel and be located inside of the second shaft. The two barrels may be arranged end to end, although a portion of the second selector barrel may be located within the first selector barrel to allow it to be connected to an actuator at the same location as the actuator for the first barrel.

Each selector barrel may carry one or more tracks which guide a respective selector peg. Where there are two selector barrels the pegs of one barrel may control the engagement and disengagement of the even gears of the gearbox assembly and the pegs of the other barrel may control the engagement and disengagement of the odd gears. A gearbox assembly with two barrels will be sequential but this may enable quicker shift times because it is possible for two gears to be moved into engagement at the same time for a very short period. If timed correctly a gearbox of this type may provide a continuous transfer of torque from the input shaft to the output shaft with no breaks when shifting gear ratios. This requires high speed actuation of the selector barrels and precise timing, and is therefore generally only suitable for use in sophisticated gearboxes.

The track or tracks may comprise grooves that are formed in the outer surface of the selector barrel.

The gearbox assembly may include an electronic control unit which receives gear selection demand signals, and an output which applies a drive signal to the actuator for the selector barrel. The electronic control unit may include a signal processor and an area of memory which stores a computer program that when running on the signal processor causes the appropriate gear to be engaged as a function of the selection demand signal.

The gear selector demand signals may be provided by a user operable input device such as a shift paddle assembly or gear lever.

The second shaft may connect directly to a differential gear. The first shaft may connect directly to an engine or may be connected to the engine through a gearset. In the later case, the first shaft can be offset from the engine output shaft, and may in that case be correctly referred to as a layshaft.

The selector barrel may be driven by an electric motor or a hydraulic actuator. When there are two selector barrels they may both be driven from an electric motor or hydraulic actuator located at only one end of the gearbox assembly. The outputs of the two electric motors or hydraulic actuators may be arranged concentrically. Placing them at the one end makes it easier to make connections to the motor or actuator.

Where there are two motors or actuators at the one end of the assembly, the selector barrels may be hollow to enable drive to pass through one barrel to actuate the other barrel.

There will now be described by way of example only one embodiment of the present invention with reference to and as illustrated in the accompanying drawings of which:
**Figure 1** is a view in plan of a prior art simple two ratio gearbox that uses selector forks to select a gear
**Figure 2** is a view in plan of a part of a simple two ratio gearbox assembly in accordance with the present invention;
**Figure 3** is a schematic view of a part of the gearbox assembly of Figure 1 showing a selection mechanism which in use allows the two adjacent gear ratios to be engaged or disengaged;
**Figure 4** is more detailed view of the selector ring assembly for the gearbox of Figure 3 showing detail of a synchromesh mechanism;
**Figure 5** is a perspective view of the selector barrel of the gearbox of Figure 2;
**Figure 6** shows the pattern of movement of the selector peg axially relative to the output shaft as the selector barrel is rotated;
**Figure 7** is a cross section through the gearbox assembly along the line A-A in Figure 3 with the axis of the output shaft reaching out of the plane of the page; and
**Figure 8** is a view of a second embodiment of a gearbox assembly which includes two selector barrels that can be independently controlled.

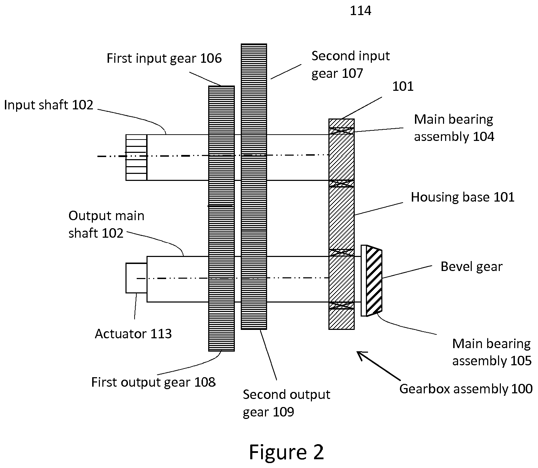

Figures 2 to 4 show an embodiment of a simple two-ratio sequential gearbox assembly 100 for a road car or a motorcycle that falls within the scope of the present invention as defined by the appended claims.

In a practical gearbox there are likely to be more than two gear ratios but the skilled person will understand how to extend the teachings of the gearbox that is shown by duplicating components.

The gearbox assembly 100, as shown in Figure 1, comprises a housing 101 (only an end wall or base being shown in the drawing) which surrounds a first shaft 102 and a second shaft 103. In the example the first shaft is an input shaft to which an input torque is applied from an engine, such as an internal combustion engine. The second shaft is an output shaft from which torque is taken from the gearbox, for instance to the front or rear driven wheels of a motor vehicle.

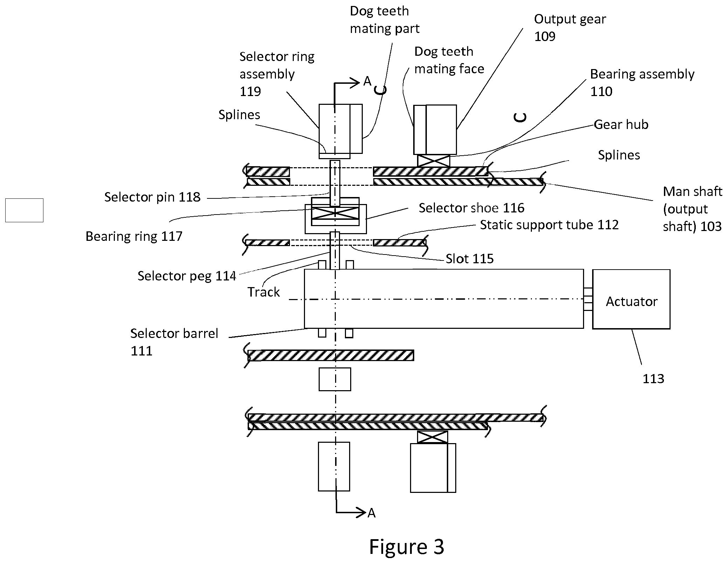

The two shafts 102, 103 are aligned with their respective long axes in parallel but offset from one another, and each shaft 102, 103 is supported at one end by a respective main bearing assembly 104,105 located in a respective opening in the end wall of the gearbox housing. The input shaft 102 carries two input gear wheels 106,107, each secured to the input shaft 102 through splines on the input shaft and splines on the input gear wheels. The output shaft 103 similarly carries two output gear wheels 108,109, each one in meshed tooth engagement with a corresponding gear wheel of the input shaft. Unlike the gear wheel of the input shaft, these gear wheels are not secured to the output shaft 103 using splines. Instead, an inner circumferential face of each outer gear wheel is spaced from the output shaft and a bearing assembly 110 is located in the resulting space. This can be seen in Figure 3. The bearing assembly 110 comprises an outer bearing race secured to the gear wheel, and an inner bearing race secured to the output shaft. A set of rolling elements are located between the two races. The bearing assembly 110 allows the output gear wheel 108,109 to rotate freely around the output shaft when they are not selected yet resists axial loads.

As will be described below the gearbox assembly 100 includes a selector mechanism which allows an output gear wheel 108,109 to be locked to the output shaft 103 when a gear ratio is selected.

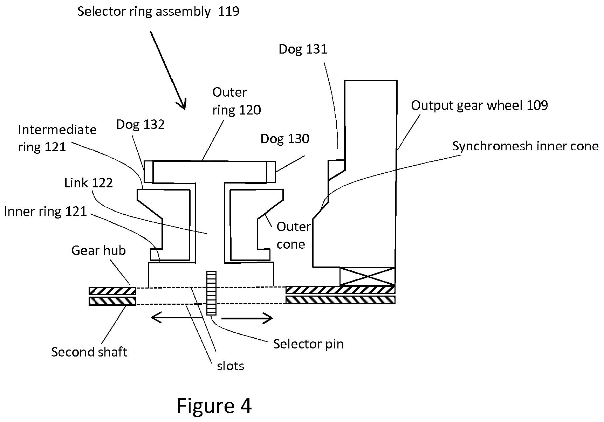

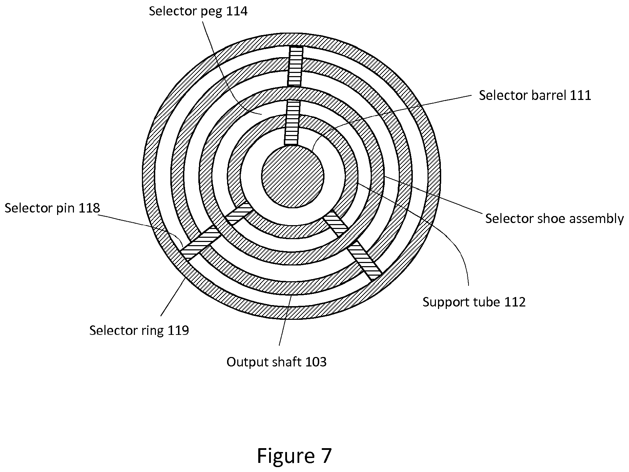

The selector mechanism can be seen best in Figures 3 and 4. It comprises a selector barrel 111 in the form of a cylinder which is rotatably supported by a support tube 112 that is in turn located inside the hollow output shaft 103. The barrel is arranged in line within the support tube so that the barrel 111, the support tube 112 and the output shaft 103 all share a common axis. This can best be seen in Figure 7. The support tube 112 is axially-fixed in position so that it cannot rotate relative to the gearbox housing and provides a fixing point for a rotary actuator 113. The actuator 113 is connected to the selector barrel 111 and in use may be operated to cause the selector barrel 111 to rotate within the support tube 112 when changing gears. The angular position of the selector barrel within the support tube determines which, if any, of the gears are selected.

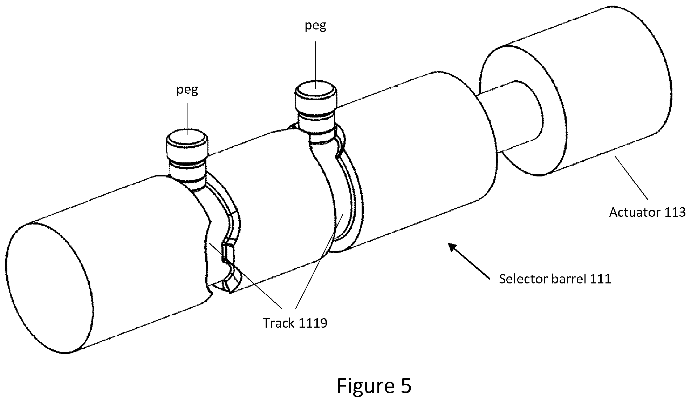

The selector barrel 111 is provided with a selector barrel track 111a guides a selector peg 114. This can be seen in Figure 5. As shown the track 111a comprises a groove cut into the outer surface of the selector barrel 111. The peg 114 has one end located in the groove 111a and extends radially away from selector barrel 111 to pass through an axial slot 115 formed in the support tube. The other end of each peg 114 is secured to a selector shoe assembly that is located around the support tube 112.

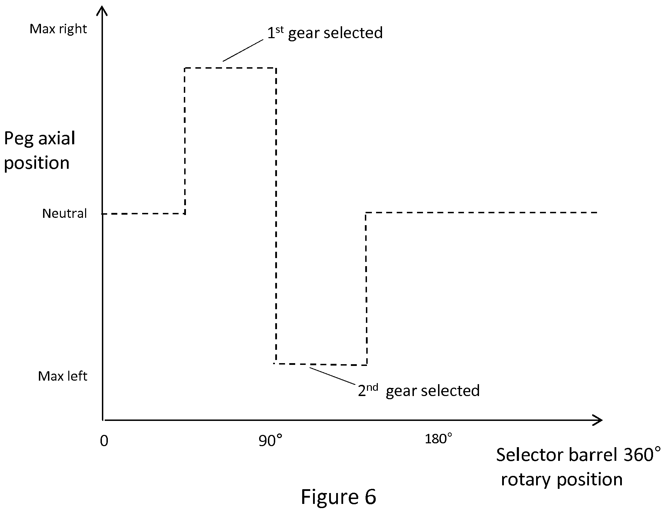

The selector shoe assembly comprises of an annular ring, or selector shoe 116, that is located on the support tube 112 and is constrained so that it cannot rotate relative to the support tube 112 but is otherwise free to move to and fro along the support tube 112. In use, as the selector barrel 111 is rotated the selector peg 114 will move along the axial slot 115 in the support tube as shown in Figure 6 and in doing so the selector peg 114 moves the selector shoe 116 a corresponding amount along the support tube 112.

The annular ring of the selector shoe 116 defines a support track that securely locates an inner race of an annular bearing assembly 117 that forms a part of the selector shoe assembly. An outer race of the annular bearing assembly is connected to the inner race through bearings. Note that this selector shoe assembly is located inside the hollow output shaft 103. Protruding from each outer bearing race is a set of selector pins 118, with three being preferred, each of which extend through an elongate slot that extends axially along the output shaft 103. Thus, as the output shaft spins around its axis the outer race will spin with it, but the selector pins will move to and fro along their respective slots in the output shaft as the selector shoe moves along the support tube.

The selector pins 118 of each selector shoe assembly are each keyed to a selector ring 119 that is located concentric with the output shaft 103 on the outside of the output shaft. The selector ring 119 is free to move axially to and fro along the output shaft 103 but is prevented from rotating relative to the output shaft by the selector pins 118. Optionally it may also be prevented from rotating by one or more splines. The selector ring assembly is shown in detail in Figure 4.

The selector ring assembly is located between the two output gear wheels as shown in more detail in Figure 4, although only one is shown in Figure 3. The selector ring assembly comprises three linked rings. An outer ring 120 has a first set of dog teeth 130 on one side that faces a facing set of dog teeth 131 carried by a first one of the adjacent output gear wheels. This outer ring 120 also has a second set of dog teeth 132 on an opposing side that faces corresponding dog teeth provided on the second one of the adjacent output gear wheels. The outer ring 120 is connected to an inner ring 121 by a set of rigid radially extending links 123 and the inner ring is connected to the selector pins. In a neutral position none of the dog teeth 130,132 on the outer ring of the selector ring assembly are engaged with the dog teeth of either output gear wheel. In an engaged positon the selector ring assembly can be moved to engage dogs on one or other of the adjacent gear wheels.

Between the inner ring 121 and outer ring 120 is an intermediate ring 123 that carries a part of a synchromesh mechanism, cooperating with another part of the synchromesh mechanism connected to each gearwheel. As is well known in the art, the synchromesh mechanism engages slightly before the dog teeth to help match the speed of the output gearwheel to the speed of the output shaft, helping to make the engagement of the gear smoother.

When a gear is engaged, torque transfers from the input shaft 102 through the gearwheels and the engaged selector ring onto the output shaft 103. When disengaged, the output gearwheel spins freely around the output shaft so that no torque is transferred from the input shaft to the output shaft.

The selection of a gear is achieved by rotation of the selector barrel 111. This causes the selector pegs 114 to move along their axial slots 115 in a pattern set by the shape of the tracks in a known manner used in prior art gearboxes which use selector forks to move the selector rings.

To provide a gearbox assembly 101 with more than two gear ratios, a second pair of input gearwheels and a second pair of output gearwheels may be provided which are axially offset along the input shaft and output shaft. These may be engaged by a second selector mechanism which requires a second selector peg to engage a track in the selector barrel. Figure 5 shows a barrel with two tracks that can receive two selector pegs.

In an alternative, common in the current racing cars operating in the Formula 1^{™} championship and in race cars for other race series, a pair of selector barrels may be provided and the track for one pair of gear ratios may be provided on one barrel and the track for the second pair of gear ratios may be provided on the second selector barrel. The two barrels may be arranged to be rotated independently. This arrangement may enable two gears to be engaged simultaneously for very short periods of time to enable gear shifts to be made with no loss in torque transfer across the gearbox

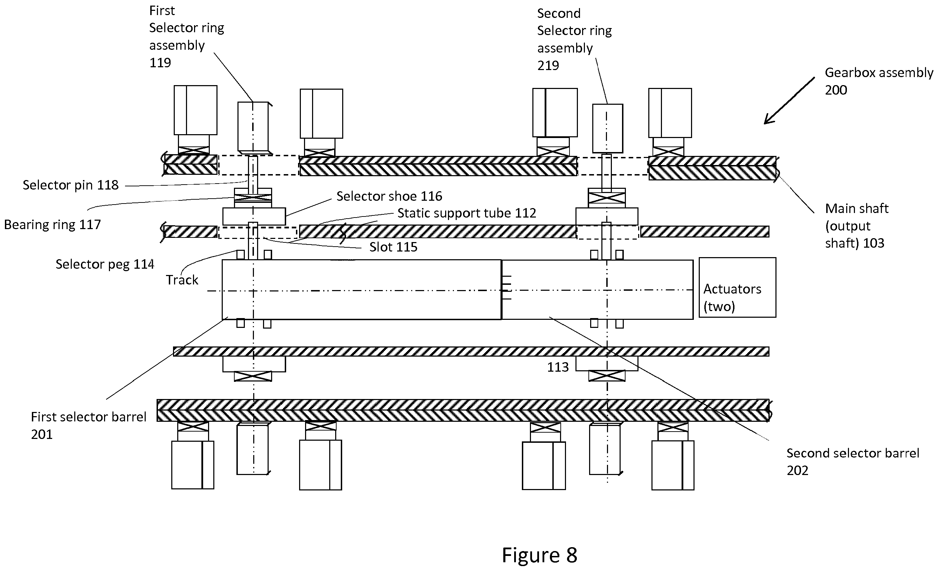

Figure 8 shows a second embodiment of a gearbox assembly 200 in which two selector barrels 201, 202 are provided, each one independently driven by a respective actuator. The gears are split across the two barrels, with four gears being shown in this example. The gears are arranged in pairs. The first pair are engaged by a first selector ring 119 as for the first embodiment which is moved by a first barrel. The second pair are engaged by a second selector ring 219 that is moved by the second barrel. The first selector ring engages the first and third gears, and the second engaged the second and fourth gears. This arrangement allows for two gears to be engaged at the same time for very short periods of time during a gear change, enabling for a gear change with little no drop in the transmission of torque through the gearbox assembly to be achieved.

## Claims

1. A gearbox assembly (100,200) comprising:
a first shaft (102) and a second shaft (103),
a gearset comprising:
a first gear wheel (106) fixed to the first shaft and
a second gear wheel (108) that is supported by an annular bearing assembly around the second shaft, the second gear wheel having an engagement face,
in which the first gear wheel(106) and second gear wheel (108) are permanently intermeshed to define one gear ratio of the gearbox so that rotation of the first shaft (102) causes corresponding rotation of the first gear wheel (106) and in turn rotation of the second gear wheel (108), and
a selector mechanism comprising:
a selector barrel (111, 201,202) located inside the second shaft (103) having at least one selector barrel track (111a) that guides a selector peg (114), rotation of the selector barrel causing movement of the selector peg (114) in a direction that is parallel to the axis of the second shaft (103),
a selector ring assembly (119) movable axially along the second shaft (103) between an engaged position and a disengaged position, the selector ring (119) in the engaged position engaging with the second gear wheel (106) and in the disengaged position being spaced apart from the second gear wheel (106),
and further comprising a selector shoe assembly (116,117) that connects the selector ring assembly (119) to the selector peg so that the axial position of the selector ring (119) is set by the axial position along the second shaft (103) of the selector peg, (114)
and **characterised in that** the selector barrel (111,201) is located within a support tube (112) that is located within the second shaft (103), concentric with the second shaft, and in which the support tube (112) is secured so that is does not rotate relative to a housing of the gearbox and whereby an axial slot (115) is provided in the support tube (112) which the selector peg (114) passes through and can move along as the selector barrel (111,201,202) rotates.

2. A gearbox assembly according to claim 1 in which the first shaft (102) comprises an input shaft of the gearbox assembly and the second shaft (103) comprises an output shaft of the gearbox, the first gear wheel (106) comprises an input gear and the second gear wheel (108) comprises an output gear.

3. A gearbox assembly according to claim 1 or claim 2 in which the selector shoe assembly comprises a rotationally fixed portion (116) that does not rotate with the second shaft (103) and is connected to the selector peg (114), a rotationally free portion that rotates with the second shaft (103) and is connected to the selector ring (119), and a bearing assembly (117) which connects the rotationally fixed portion to the rotationally free portion whilst preventing relative axial movement between the rotationally fixed and rotationally free portions.

4. A gearbox assembly according to claim 3 in which the rotationally fixed portion comprises a selector shoe (116) that defines a support track for the bearing assembly (117) and the bearing assembly of the selector shoe assembly comprises an annular inner race that is received by the track of the selector shoe, an annular outer race that is connected to the selector ring, and a plurality of bearings located between the two races.

5. A gearbox assembly according to claim 3 or claim 4 in which the rotationally free portion of the selector shoe assembly is connected to the selector ring by at least one selector pin (118).

6. A gearbox assembly according to any preceding claim in which the selector ring assembly (119) includes a set of dog teeth and the second gear wheel (106) includes a further set of dog teeth, the two sets of dog teeth meshing when the selector ring assembly is in the engaged position.

7. A gearbox assembly according to any preceding claim in which the selector ring assembly (119) and second gear wheel (106) each include a respective part of a synchromesh mechanism which is arranged in use to cause the speed of the second gearwheel and the speed of the selector ring assembly to match due to frictional engagement of the two parts of the synchromesh mechanism prior to the engagement faces being brought into contact.

8. A gearbox assembly according to claim 7 when dependent on claim 5 in which the selector ring (119) comprises an inner ring that is connected to the selector pin (118), an intermediate ring that carries the part of the synchromesh, an outer ring that carries the second engagement face, and a rigid link that passes through a radial slot in the intermediate ring to connect the inner ring and outer rings together, the intermediate ring being free to move axially relative to the inner and outer ring.

9. A gearbox assembly according to any preceding claim in which the selector ring assembly (119) is located in the disengaged position at least partially within an undercut of the second gear wheel (106).

10. A gearbox assembly according to any preceding claim which further comprises an actuator (113) which controls the rotational position of the selector barrel (111,201) relative to the gearbox housing.

11. A gearbox assembly according to any preceding claim which further includes:
a third gear wheel (107) fixed to the first shaft (102) and
a fourth gear wheel (108) that is supported by an annular bearing assembly around the second shaft (103), the fourth gear wheel (108) having an engagement face, the third and fourth gearwheels being axially offset from the first and second gearwheels,
in which the third gear wheel (107) and fourth gear wheel (108) are permanently intermeshed to define one gear ratio of the gearbox so that rotation of the first shaft causes corresponding rotation of the first gear wheel and in turn rotation of the second gear wheel,
the selector ring assembly (119) being located axially between the third gearwheel and forth gearwheel and being movable by the selector pin (118) between a disengaged position and two engaged positions, a first of the engaged positions mating the selector ring to the second gearwheel and a second engaged position in which the selector ring mates with the fourth gear wheel. This allows the one selector ring to be used to select two gear ratios.

12. A gearbox assembly according to any preceding claim which includes a second track carried by the selector barrel (111,201) or a second selector barrel (202)that guides a second selector peg, rotation of the associated selector barrel causing movement of the second selector pin in a direction that is parallel to the axis of the second shaft (103),
a second selector ring assembly (219) movable axially along the second shaft (103) between an engaged position and a disengaged position, the second selector ring in the engaged position engaging with a sixth gear wheel and in the disengaged position being spaced apart from the sixth gear wheel,
and further comprising a second selector shoe assembly that connects the second selector ring assembly (219) to the second selector peg so that the axial position of the second selector ring (219) is set by the axial position along the second shaft of the second selector peg.

13. A gearbox assembly according to any preceding claim which includes a second selector barrel (202) which can be rotated independently of the first selector barrel (111) which shares a common axis of rotation with the first selector barrel, each selector barrel carrying at least one track which guides a respective selector peg.

## Patentansprüche

1. Getriebeanordnung (100, 200), die Folgendes umfasst:
eine erste Welle (102) und eine zweite Welle (103),
einen Zahnradsatz, der Folgendes umfasst:
ein erstes Zahnrad (106), das an der ersten Welle fixiert ist, und
ein zweites Zahnrad (108), das durch eine ringförmige Lageranordnung um die zweite Welle gelagert ist, wobei das zweite Zahnrad eine Eingriffsfläche aufweist,
wobei das erste Zahnrad (106) und das zweite Zahnrad (108) dauerhaft ineinandergreifen, um eine Getriebeübersetzung des Getriebes derart zu definieren, dass eine Drehung der ersten Welle (102) eine entsprechende Drehung des ersten Zahnrads (106) und wiederum eine Drehung des zweiten Zahnrads (108) bewirkt, und
einen Schaltmechanismus, der Folgendes umfasst:
eine Schaltwalze (111, 201, 202), die in der zweiten Welle (103) angeordnet ist, die mindestens eine Schaltwalzenschiene (111a) aufweist, die einen Schaltzapfen (114) führt, wobei eine Drehung der Schaltwalze eine Bewegung des Schaltzapfens (114) in einer Richtung bewirkt, die parallel zu der Achse der zweiten Welle (103) ist,
eine Schaltringanordnung (119), die axial entlang der zweiten Welle (103) zwischen einer eingreifenden Position und einer getrennten Position beweglich ist, wobei der Schaltring (119) in der eingreifenden Position mit dem zweiten Zahnrad (106) in Eingriff kommt und in der getrennten Position von dem zweiten Zahnrad (106) beabstandet ist,
und ferner umfassend eine Schaltschuhanordnung (116, 117), die die Schaltringanordnung (119) mit dem Schaltzapfen derart verbindet, dass die axiale Position des Schaltrings (119) durch die axiale Position entlang der zweiten Welle (103) des Schaltzapfens (114) eingestellt wird,
und **dadurch gekennzeichnet, dass** die Schaltwalze (111, 201) in einem Stützrohr (112) angeordnet ist, das in der zweiten Welle (103) konzentrisch mit der zweiten Welle angeordnet ist, und wobei das Stützrohr (112) derart gesichert ist, dass es sich nicht relativ zu einem Gehäuse des Getriebes dreht, und wobei ein axialer Schlitz (115) in dem Stützrohr (112) bereitgestellt ist, durch den der Schaltzapfen (114) verläuft und entlang dessen dieser sich bewegen kann, während sich die Schaltwalze (111, 201, 202) dreht.

2. Getriebeanordnung nach Anspruch 1, wobei die erste Welle (102) eine Antriebswelle der Getriebeanordnung umfasst und die zweite Welle (103) eine Abtriebswelle des Getriebes umfasst, wobei das erste Zahnrad (106) ein Antriebszahnrad umfasst und das zweite Zahnrad (108) ein Abtriebszahnrad umfasst.

3. Getriebeanordnung nach Anspruch 1 oder Anspruch 2, wobei die Schaltschuhanordnung einen drehfesten Abschnitt (116), der sich nicht mit der zweiten Welle (103) dreht und mit dem Schaltzapfen (114) verbunden ist, einen frei drehenden Abschnitt, der sich mit der zweiten Welle (103) dreht und mit dem Schaltring (119) verbunden ist, und eine Lageranordnung (117), die den drehfesten Abschnitt mit dem frei drehenden Abschnitt verbindet, während sie eine relative axiale Bewegung zwischen dem drehfesten und dem frei drehenden Abschnitt verhindert, umfasst.

4. Getriebeanordnung nach Anspruch 3, wobei der drehfeste Abschnitt einen Schaltschuh (116) umfasst, der eine Stützschiene für die Lageranordnung (117) definiert, und die Lageranordnung der Schaltschuhanordnung einen ringförmigen Innenring, der durch die Schiene des Schaltschuhs aufgenommen ist, einen ringförmigen Außenring, der mit dem Schaltring verbunden ist, und eine Mehrzahl von Lagern, die zwischen den zwei Ringen angeordnet sind, umfasst.

5. Getriebeanordnung nach Anspruch 3 oder Anspruch 4, wobei der frei drehende Abschnitt der Schaltschuhanordnung mit dem Schaltring durch mindestens einen Schaltstift (118) verbunden ist.

6. Getriebeanordnung nach einem der vorhergehenden Ansprüche, wobei die Schaltringanordnung (119) einen Satz von Klauenzähnen aufweist und das zweite Zahnrad (106) einen weiteren Satz von Klauenzähnen aufweist, wobei die zwei Sätze von Klauenzähnen ineinandergreifen, wenn sich die Schaltringanordnung in der eingreifenden Position befindet.

7. Getriebeanordnung nach einem der vorhergehenden Ansprüche, wobei die Schaltringanordnung (119) und das zweite Zahnrad (106) jeweils einen jeweiligen Teil eines Synchrongetriebemechanismus aufweisen, der in Verwendung derart angeordnet ist, dass aufgrund eines Reibschlusses der zwei Teile des Synchrongetriebemechanismus, bevor die Eingriffsflächen in Kontakt gebracht werden, bewirkt wird, dass die Drehzahl des zweiten Zahnrads und die Drehzahl der Schaltringanordnung übereinstimmen.

8. Getriebeanordnung nach Anspruch 7, wenn abhängig von Anspruch 5, wobei der Schaltring (119) einen Innenring, der mit dem Schaltstift (118) verbunden ist, einen Zwischenring, der den Teil des Synchrongetriebes trägt, einen Außenring, der die zweite Eingriffsfläche trägt, und eine starre Verbindung, die durch einen radialen Schlitz in dem Zwischenring verläuft, um den Innenring und Außenringe miteinander zu verbinden, umfasst, wobei sich der Zwischenring axial relativ zu dem Innen- und Außenring frei bewegen kann.

9. Getriebeanordnung nach einem der vorhergehenden Ansprüche, wobei die Schaltringanordnung (119) in der getrennten Position zumindest teilweise in einer Hinterschneidung des zweiten Zahnrads (106) angeordnet ist.

10. Getriebeanordnung nach einem der vorhergehenden Ansprüche, die ferner einen Aktuator (113) umfasst, der die Drehposition der Schaltwalze (111, 201) relativ zu dem Getriebegehäuse steuert.

11. Getriebeanordnung nach einem der vorhergehenden Ansprüche, die ferner Folgendes aufweist:
ein drittes Zahnrad (107), das an der ersten Welle (102) fixiert ist, und
ein viertes Zahnrad (108), das durch eine ringförmige Lageranordnung um die zweite Welle (103) gelagert ist, wobei das vierte Zahnrad (108) eine Eingriffsfläche aufweist, wobei das dritte und das vierte Zahnrad axial von dem ersten und dem zweiten Zahnrad versetzt sind,
wobei das dritte Zahnrad (107) und das vierte Zahnrad (108) dauerhaft ineinandergreifen, um ein Getriebeverhältnis des Getriebes derart zu definieren, dass eine Drehung der ersten Welle eine entsprechende Drehung des ersten Zahnrads und wiederum eine Drehung des zweiten Zahnrads bewirkt,
wobei die Schaltringanordnung (119) axial zwischen dem dritten Zahnrad und dem vierten Zahnrad angeordnet ist und durch den Schaltstift (118) zwischen einer getrennten Position und zwei eingreifenden Positionen beweglich ist, wobei eine erste der eingreifenden Positionen den Schaltring mit dem zweiten Zahnrad koppelt und eine zweite eingreifende Position, in der der Schaltring mit dem vierten Zahnrad gekoppelt wird. Dies ermöglicht, dass der eine Schaltring zum Auswählen von zwei Getriebeübersetzungen verwendet werden kann.

12. Getriebeanordnung nach einem der vorhergehenden Ansprüche, die eine zweite Schiene aufweist, die durch die Schaltwalze (111, 201) oder eine zweite Schaltwalze (202) getragen ist, die einen zweiten Schaltzapfen führt, wobei eine Drehung der zugehörigen Schaltwalze eine Bewegung des zweiten Schaltstifts in einer Richtung bewirkt, die parallel zu der Achse der zweiten Welle (103) ist,
wobei eine zweite Schaltringanordnung (219) axial entlang der zweiten Welle (103) zwischen einer eingreifenden Position und einer getrennten Position beweglich ist, wobei der zweite Schaltring in der eingreifenden Position mit einem sechsten Zahnrad in Eingriff kommt und in der getrennten Position von dem sechsten Zahnrad beabstandet ist,
und ferner umfassend eine zweite Schaltschuhanordnung, die die zweite Schaltringanordnung (219) mit dem zweiten Schaltzapfen derart verbindet, dass die axiale Position des zweiten Schaltrings (219) durch die axiale Position entlang der zweiten Welle des zweiten Schaltzapfens eingestellt wird.

13. Getriebeanordnung nach einem der vorhergehenden Ansprüche, die eine zweite Schaltwalze (202) aufweist, die unabhängig von der ersten Schaltwalze (111) gedreht werden kann, die eine gemeinsame Drehachse mit der ersten Schaltwalze aufweist, wobei jede Schaltwalze mindestens eine Schiene trägt, die einen jeweiligen Schaltzapfen führt.

## Revendications

1. Ensemble boîte de vitesses (100, 200), comprenant :
un premier arbre (102) et un second arbre (103),
un train d'engrenages comprenant :
une première roue d'engrenage (106) fixée au premier arbre, et
une deuxième roue d'engrenage (108) qui est supportée par un ensemble palier annulaire autour du second arbre, la deuxième roue d'engrenage ayant une face d'entrée en prise,
dans lequel la première roue d'engrenage (106) et la deuxième roue d'engrenage (108) sont mutuellement engrenées en permanence pour définir un rapport de vitesse de la boîte de vitesses pour que la rotation du premier arbre (102) cause la rotation correspondante de la première roue d'engrenage (106) et ensuite la rotation de la deuxième roue d'engrenage (108), et
un mécanisme de sélecteur comprenant :
un corps cylindrique de sélecteur (111, 201, 202) situé à l'intérieur du second arbre (103) ayant au moins un chemin de corps cylindrique de sélecteur (111a) qui guide une cheville de sélecteur (114), la rotation du corps cylindrique de sélecteur causant le mouvement de la cheville de sélecteur (114) dans une direction qui est parallèle à l'axe du second arbre (103),
un ensemble bague de sélecteur (119) mobile axialement le long du second arbre (103) entre une position en prise et une position hors de prise, la bague de sélecteur (119), dans la position en prise, entrant en prise avec la deuxième roue d'engrenage (106) et, dans la position hors de prise, étant espacée de la deuxième roue d'engrenage (106),
et comprenant en outre un ensemble sabot de sélecteur (116, 117) qui raccorde l'ensemble bague de sélecteur (119) à la cheville de sélecteur pour que la position axiale de la bague de sélecteur (119) soit établie par la position axiale le long du second arbre (103) de la cheville de sélecteur (114),
et **caractérisé en ce que** le corps cylindrique de sélecteur (111, 201) est situé à l'intérieur d'un tube de support (112) qui est situé à l'intérieur du second arbre (103), concentrique avec le second arbre, et dans lequel le tube de support (112) est fixé pour qu'il n'entre pas en rotation relativement à un carter de la boîte de vitesses et moyennant quoi une fente axiale (115) est prévue dans le tube de support (112) à travers laquelle la cheville de sélecteur (114) passe et le long de laquelle elle peut se déplacer lorsque le corps cylindrique de sélecteur (111, 201, 202) est en rotation.

2. Ensemble boîte de vitesses selon la revendication 1, dans lequel le premier arbre (102) comprend un arbre d'entrée de l'ensemble boîte de vitesses et le second arbre (103) comprend un arbre de sortie de la boîte de vitesses, la première roue d'engrenage (106) comprend un engrenage d'entrée et la deuxième roue d'engrenage (108) comprend un engrenage de sortie.

3. Ensemble boîte de vitesses selon la revendication 1 ou la revendication 2, dans lequel l'ensemble sabot de sélecteur comprend une portion rotationnellement fixe (116) qui n'entre pas en rotation avec le second arbre (103) et est raccordée à la cheville de sélecteur (114), une portion rotationnellement libre qui entre en rotation avec le second arbre (103) et est raccordée à la bague de sélecteur (119), et un ensemble palier (117) qui raccorde la portion rotationnellement fixe à la portion rotationnellement libre tout en empêchant le mouvement axial relatif entre les portion rotationnellement fixe et portion rotationnellement libre.

4. Ensemble boîte de vitesses selon la revendication 3, dans lequel la portion rotationnellement fixe comprend un sabot de sélecteur (116) qui définit un chemin de support pour l'ensemble palier (117) et l'ensemble palier de l'ensemble sabot de sélecteur comprend une cage intérieure annulaire qui est reçue par le chemin du sabot de sélecteur, une cage extérieure annulaire qui est raccordée à la bague de sélecteur, et une pluralité de paliers situés entre les deux cages.

5. Ensemble boîte de vitesses selon la revendication 3 ou la revendication 4, dans lequel la portion rotationnellement libre de l'ensemble sabot de sélecteur est raccordée à la bague de sélecteur par au moins une goupille de sélecteur (118).

6. Ensemble boîte de vitesses selon une quelconque revendication précédente, dans lequel l'ensemble bague de sélecteur (119) inclut un jeu de dents de crabot et la deuxième roue d'engrenage (106) inclut un jeu supplémentaire de dents de crabot, les deux jeux de dents de crabot s'engrenant lorsque l'ensemble bague de sélecteur est dans la position en prise.

7. Ensemble boîte de vitesses selon une quelconque revendication précédente, dans lequel l'ensemble bague de sélecteur (119) et la deuxième roue d'engrenage (106) incluent chacun une partie respective d'un mécanisme synchroniseur qui est agencé durant l'utilisation pour faire en sorte que la vitesse de la deuxième roue d'engrenage et la vitesse de l'ensemble bague de sélecteur soient assorties en raison d'entrée en prise par frottement des deux parties du mécanisme synchroniseur avant que les faces d'entrée en prise soient mises en contact.

8. Ensemble boîte de vitesses selon la revendication 7 lorsqu'elle dépend de la revendication 5, dans lequel la bague de sélecteur (119) comprend une bague intérieure qui est raccordée à la goupille de sélecteur (118), une bague intermédiaire qui porte la partie du synchroniseur, une bague extérieure qui porte la seconde face d'entrée en prise, et une liaison rigide qui passe à travers une fente radiale dans la bague intermédiaire pour raccorder ensemble la bague intérieure et la bague extérieures, la bague intermédiaire étant libre de se déplacer axialement relativement à la bague intérieure et extérieure.

9. Ensemble boîte de vitesses selon une quelconque revendication précédente, dans lequel l'ensemble bague de sélecteur (119) est situé dans la position hors de prise au moins partiellement à l'intérieur d'un dégagement de la deuxième roue d'engrenage (106).

10. Ensemble boîte de vitesses selon une quelconque revendication précédente, qui comprend en outre un actionneur (113) qui commande la position rotationnelle du corps cylindrique de sélecteur (111, 201) relativement à la boîte de vitesses carter.

11. Ensemble boîte de vitesses selon une quelconque revendication précédente, qui inclut en outre :
une troisième roue d'engrenage (107) fixée au premier arbre (102), et
une quatrième roue d'engrenage (108) qui est supportée par un ensemble palier annulaire autour du second arbre (103), la quatrième roue d'engrenage (108) ayant une face d'entrée en prise, les troisième et quatrième roues d'engrenage étant axialement décalées par rapport aux première et deuxième roues d'engrenage,
dans lequel la troisième roue d'engrenage (107) et la quatrième roue d'engrenage (108) sont mutuellement engrenées en permanence pour définir un rapport de vitesse de la boîte de vitesses pour que la rotation du premier arbre cause la rotation correspondante de la première roue d'engrenage et ensuite la rotation de la deuxième roue d'engrenage, l'ensemble bague de sélecteur (119) étant situé axialement entre la troisième roue d'engrenage et quatrième roue d'engrenage et étant mobile par la goupille de sélecteur (118) entre une position hors de prise et deux positions en prise, une première des positions en prise accouplant la bague de sélecteur à la deuxième roue d'engrenage et une seconde position en prise dans laquelle la bague de sélecteur s'accouple avec la quatrième roue d'engrenage. Ceci permet à l'une bague de sélecteur d'être utilisée pour sélectionner deux rapports de vitesse.

12. Ensemble boîte de vitesses selon une quelconque revendication précédente, qui inclut un second chemin porté par le corps cylindrique de sélecteur (111, 201) ou un second corps cylindrique de sélecteur (202) qui guide une seconde cheville de sélecteur, la rotation du corps cylindrique de sélecteur associé causant le mouvement de la seconde goupille de sélecteur dans une direction qui est parallèle à l'axe du second arbre (103),
un second ensemble bague de sélecteur (219) mobile axialement le long du second arbre (103) entre une position en prise et une position hors de prise, la seconde bague de sélecteur, dans la position en prise, entrant en prise avec une sixième roue d'engrenage et, dans la position hors de prise, étant espacée de la sixième roue d'engrenage,
et comprenant en outre un second ensemble sabot de sélecteur qui raccorde le second ensemble bague de sélecteur (219) à la seconde cheville de sélecteur pour que la position axiale de la seconde bague de sélecteur (219) soit établie par la position axiale le long du second arbre de la seconde cheville de sélecteur.

13. Ensemble boîte de vitesses selon une quelconque revendication précédente, qui inclut un second corps cylindrique de sélecteur (202) qui peut être mis en rotation indépendamment du premier corps cylindrique de sélecteur (111) qui partage un axe commun de rotation avec le premier corps cylindrique de sélecteur, chaque corps cylindrique de sélecteur portant au moins un chemin qui guide une cheville de sélecteur respective.
